(19) Europäisches Patentamt
European Patent Office
Office européen des brevets

(11) **EP 4 567 714 B1**

(12) **EUROPÄISCHE PATENTSCHRIFT**

(45) Veröffentlichungstag und Bekanntmachung des Hinweises auf die Patenterteilung:
**22.07.2026 Patentblatt 2026/30**

(21) Anmeldenummer: **24213054.0**

(22) Anmeldetag: **14.11.2024**

(51) Internationale Patentklassifikation (IPC):
***G06T 5/50*** *(2006.01)*     ***G06T 5/70*** *(2024.01)*

(52) Gemeinsame Patentklassifikation (CPC):
**G06T 5/50; G06T 5/70;** G06T 2207/10048;
G06T 2207/30196

(54) **VERFAHREN ZUM VERRINGERN EINES RAUSCHENS IN BILDDATEN**

METHOD FOR REDUCING NOISE IN IMAGE DATA

PROCÉDÉ DE RÉDUCTION DU BRUIT DANS DES DONNÉES D'IMAGE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **04.12.2023 DE 102023212170**

(43) Veröffentlichungstag der Anmeldung:
**11.06.2025 Patentblatt 2025/24**

(73) Patentinhaber: **Robert Bosch GmbH 70442 Stuttgart (DE)**

(72) Erfinder:
• **Meyer, Patrick**
  **70771 Leinfelden-Echterdingen (DE)**
• **Saup, Tim**
  **70771 Leinfelden-Echterdingen (DE)**
• **Frank, Michael**
  **75015 Bretten (DE)**
• **Rumberg, Axel**
  **76199 Karlsruhe (DE)**

(56) Entgegenhaltungen:
**US-A1- 2020 045 231     US-A1- 2021 218 909**

## Beschreibung

Die Erfindung betrifft ein Verfahren zum Verringern eines Rauschens in Bilddaten. Ferner betrifft die Erfindung ein Computerprogramm, eine Vorrichtung sowie ein Speichermedium zu diesem Zweck.

Stand der Technik

In Wärmebildern tritt aufgrund verschiedener Faktoren ein erhöhtes Rauschen auf, die beispielsweise auf Sensorcharakteristika zurückzuführen sind. Die Detektoren in Wärmebildkameras sind hochsensibel und können selbst minimale Temperaturunterschiede erfassen. Diese Sensibilität kann sie jedoch auch anfällig für elektronisches Rauschen machen, das im Sensor selbst generiert wird. Ferner kann beim Auslesen der Sensoren das Rauschen ein Störfaktor sein. Bei der Digitalisierung des analogen Signals können Quantisierungsfehler auftreten, die als Rauschen interpretiert werden. Insbesondere hochfrequentes und stochastisches Rauschen kann im Rahmen von Wärmebildern eine Herausforderung darstellen. Um Rauschen in Bildern zu reduzieren ist beispielsweise eine Mittelung aus dem Bereich der Bildverarbeitung oder der Bewegungserkennung in Bildern bekannt. Solche Ansätze sind zum Beispiel aus US 2020/045231 A1 und US 2021/218909 A1 bekannt.

Offenbarung der Erfindung

Gegenstand der Erfindung ist ein Verfahren mit den Merkmalen des Anspruchs 1, ein Computerprogramm mit den Merkmalen des Anspruchs 8, eine Vorrichtung mit den Merkmalen des Anspruchs 9, ein computerlesbares Speichermedium mit den Merkmalen des Anspruchs 10 sowie ein Kamerasystem mit den Merkmalen des Anspruchs 11. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogramm, der erfindungsgemäßen Vorrichtung, dem erfindungsgemäßen computerlesbaren Speichermedium sowie dem erfindungsgemäßen Kamerasystem, und jeweils umgekehrt, so dass bezüglich der Offenbarung zu den einzelnen Erfindungsaspekten stets wechselseitig Bezug genommen wird bzw. werden kann.

Gegenstand der Erfindung ist insbesondere ein Verfahren zum Verringern eines Rauschens in Bilddaten, umfassend die nachfolgenden Schritte, wobei die Schritte wiederholt und/oder nacheinander ausgeführt werden können.

In einem ersten Schritt werden vorzugsweise Bilddaten bereitgestellt, wobei die Bilddaten wenigstens ein Wärmebild umfassen. Die Bilddaten resultieren insbesondere aus einer Erfassung wenigstens eines Sensors. Der wenigstens eine Sensor ist dabei bevorzugt ein Wärmebildkamerasensor, welcher beispielsweise ein Infrarot-Detektorarray umfasst, sodass die Bilddaten insbesondere Wärmebilddaten sind. Das Bereitstellen von Bilddaten kann somit ein Bereitstellen von Wärmebilddaten sein. Die Wärmebilder können Infrarotbilder sein.

In einem weiteren Schritt wird vorzugsweise eine in dem wenigstens einen Wärmebild dargestellte Temperaturdifferenz auf Basis einer Analyse von Temperaturdaten des wenigstens einen Wärmebildes ermittelt. Die Temperaturdifferenz spiegelt somit insbesondere einen Bereich zwischen einem niedrigsten und einem höchsten in dem Wärmebild dargestellten Temperaturwert wider. Die Temperaturdifferenz wird vorzugsweise für ein jeweiliges einzelnes Wärmebild ermittelt. Die Temperaturdaten sind insbesondere einzelne Temperaturwerte, welche durch jeweilige Farben in den Wärmebildern repräsentiert werden. Ferner kann auf Basis der Temperaturdifferenz im Bild ein sogenannter Span ermittelt werden, welcher für die Repräsentation der Temperaturdaten in den Wärmebildern in Form von Farbwerten spezifisch ist. Beispielsweise kann der minimale Span als 5°C definiert werden, wobei der Span eine Differenz zwischen einer minimal und einer maximal in dem Bild dargestellten Temperatur ist. Der Span kann ab Überschreiten des definierten minimalen Spans dem Wert der Temperaturdifferenz entsprechen. Ferner ist auch eine Bewertung der Temperaturverteilung anhand eines Histogramms denkbar, wobei zum Beispiel nicht alle Temperaturwerte berücksichtigt werden, sondern nur die inneren 98%.

In einem weiteren Schritt wird vorzugsweise eine Anzahl an Mittelungen für eine Auswertung von weiteren Bilddaten auf Basis der ermittelten Temperaturdifferenz bestimmt. Auch ist denkbar, dass die Anzahl an Mittelungen auf Basis des auf Basis der Temperaturdifferenz ermittelten Spans bestimmt wird. Die Anzahl an Mittelungen gibt insbesondere vor, wie viele Wärmebilder jeweils für die Auswertung der weiteren Bilddaten gemittelt werden. Die weiteren Bilddaten resultieren aus einer weiteren Erfassung des wenigstens einen Sensors, d.h. insbesondere desselben wenigstens einen Sensors, aus welchem die Bilddaten resultieren. Somit sind vorzugsweise auch die weiteren Bilddaten Wärmebilddaten. Bei einer beispielhaften Anzahl von fünf Mittelungen können beispielsweise fünf jeweilige Temperaturwerte von fünf Wärmebildern für einen jeweiligen Pixel oder für einen jeweiligen Bereich an Pixeln gemittelt werden. Es kann dabei insbesondere vorgesehen sein, dass bei einer größeren Temperaturdifferenz eine geringere Anzahl an Mittelungen vorgesehen ist, als bei einer geringeren Temperaturdifferenz. Die Anzahl an Mittelungen kann auch einem Wert von eins entsprechen, wobei keine Mittelung, sondern eine einzelne Auswertung eines jeweiligen Wärmebildes vorgesehen ist.

Es kann ferner vorgesehen sein, dass auf Basis der bestimmten Anzahl an Mittelungen eine Bildwiederholrate des erfindungsgemäßen Kamerasystems beeinflusst wird, beziehungsweise, dass eine Änderung der Bildwiederholrate initiiert wird. Beispielsweise kann sich die Bildwiederholrate verdoppeln, wenn eine Mittelung um eine Anzahl von zwei bestimmt wird.

In einem weiteren Schritt wird vorzugsweise das Rauschen in den weiteren Bilddaten durch die Auswertung mit der bestimmten Anzahl an Mittelungen verringert. Das Verringern des Rauschen ist insbesondere eine Konsequenz der Mittelung, da Ausreißer in einzelnen Wärmebildern durch die Mittelung vorteilhaft eine geringere Amplitude aufweisen. Das grundlegende Prinzip des Reduzierens des Rauschens besteht insbesondere darin, mehrere zeitlich aufeinanderfolgende Temperaturdaten in Wärmebildern für einen jeweiligen Pixel oder Pixelbereich zu erfassen und den Durchschnitt dieser Temperaturdaten zu berechnen. Durch die Mittelung können vorteilhaft zufällige Rauschanteile, die von Wärmebild zu Wärmebild variieren, reduziert werden.

In mathematischen Begriffen kann dies wie folgt formuliert werden:

$$Mittelwert(x) = \frac{1}{N} \sum_{i=1}^{N} x_i$$

Hierbei sind $x_i$ die i-ten Temperaturdaten eines jeweiligen Pixels oder Pixelbereichs $x$ und $N$ ist die Anzahl der Wärmebilder, die in die Mittelung einfließen. Durch Erhöhung des Wertes für N kann die Effizienz der Rauschunterdrückung verbessert werden, allerdings auf Kosten der zeitlichen Auflösung des Signals.

Vorteilhafterweise kann bei der Erfindung vorgesehen sein, dass das Bestimmen der Anzahl an Mittelungen die folgenden Schritte umfasst:

- Definieren von wenigstens zwei Bereichen für die Temperaturdifferenz, wobei einem jeweiligen Bereich eine definierte Anzahl an Mittelungen zugeordnet wird,
- Bestimmen der Anzahl an Mittelungen auf Basis eines Vergleichs der ermittelten Temperaturdifferenz mit den wenigstens zwei definierten Bereichen für die Temperaturdifferenz.

Beispielsweise kann ein Bereich für eine Temperaturdifferenz von mindestens 10 °C definiert werden, welchem eine Mittelung über zwei Wärmebilder zugeordnet wird und ein weiterer Bereich für weniger als 10 °C Temperaturdifferenz, welchem eine Mittelung über vier Wärmebilder zugeordnet wird. Entsprechend kann beispielsweise bei einer ermittelten Temperaturdifferenz von 12 °C eine Anzahl von zwei Mittelungen bestimmt werden. Vorteilhaft kann die Anzahl der Bereiche entsprechend einer vorliegenden Anwendung variiert werden, beispielsweise können auch wenigstens drei Bereiche definiert werden.

Optional kann es vorgesehen sein, dass das Verfahren ferner den folgenden Schritt umfasst:

- Auswerten der weiteren Bilddaten, wobei auf Basis der Anzahl an Mittelungen ein jeweiliges resultierendes Wärmebild ermittelt wird.

Das ermittelte resultierende Wärmebild entspricht somit insbesondere dem Ergebnis einer Mittelung über die bestimmte Anzahl an Wärmebildern.

Gemäß einem weiteren Vorteil kann vorgesehen sein, dass das Verfahren ferner den folgenden Schritt umfasst:

- Initiieren einer Ausgabe des jeweiligen resultierenden Wärmebildes.

Die Ausgabe kann beispielsweise mittels einer Ausgabeeinheit erfolgen, welche als Bildschirm ausgeführt sein kann. Der Bildschirm kann an einem erfindungsgemäßen Kamerasystem angeordnet sein, welches ferner den wenigstens einen Sensor, d.h. vorzugsweise einen Wärmebildkamerasensor umfassend beispielsweise ein Infrarot-Detektorarray, aufweisen kann.

Auch ist es optional denkbar, dass das Auswerten der weiteren Bilddaten den folgenden Schritt umfasst:

- Berechnen eines Mittelwertes für wenigstens einen jeweiligen Pixel des jeweiligen resultierenden Wärmebildes auf Basis der weiteren Bilddaten und der Anzahl an Mittelungen, um durch den berechneten Mittelwert eine Farbe des wenigstens einen jeweiligen Pixels zu bestimmen.

Dadurch wird insbesondere für einen jeweiligen Pixel ein jeweiliger Temperaturwert der bestimmten Anzahl an Wärmebildern gemittelt, wobei die jeweiligen Temperaturwerte durch eine Farbe in den Bilddaten repräsentiert sind. Entspricht die Anzahl an Mittelungen beispielsweise zwei, so werden insbesondere zwei Temperaturwerte eines jeweiligen Pixels der zwei jeweiligen Wärmebilder gemittelt, um einen Temperaturwert und folglich eine entsprechende Farbe für den jeweiligen Pixel in dem resultierenden Wärmebild zu erhalten.

Ferner ist es optional vorgesehen, dass das Berechnen des Mittelwertes nur für wenigstens einen bestimmten Teilbereich des resultierenden Wärmebildes durchgeführt wird. So kann beispielsweise das Bild in drei Balken unterteilt und die Mittelung lediglich in einem mittleren Balken durchgeführt werden. Alternativ kann in eine innere Region und eine äußere Region unterteilt und die Mittelung lediglich in der inneren Region durchgeführt werden. Auch ist denkbar, dass auf Basis einer Analyse der Bilddaten, beispielsweise durch einen Detektionsalgorithmus, ein ungefährer Bereich eines zu detektierenden Objekts ermittelt wird, um anschließend die Mittelung lediglich in dem ermittelten ungefähren Bereich des zu detektierenden Objekts durchzuführen. Durch die Reduzierung der Mittelung auf den wenigstens einen bestimmten Teilbereich kann vorteilhaft ein Rechenaufwand verringert werden.

In einer weiteren Möglichkeit kann vorgesehen sein, dass zumindest das Bereitstellen, insbesondere der Bilddaten, und/oder das Ermitteln, insbesondere der Temperaturdifferenz, zyklisch oder auf Basis einer Auslösebedingung durchgeführt werden, um eine neue Anzahl an Mittelungen für die Auswertung zu bestimmen. So ist denkbar, dass das Bereitstellen der Bilddaten und/oder das Ermitteln der Temperaturdifferenz jeweils in einem Zeitabstand von beispielsweise zehn Sekunden oder nach einer definierten Anzahl von durch den wenigstens einen Sensor erfassten Wärmebildern durchgeführt wird. Auch kann vorgesehen sein, dass die Auslösebedingung eine Betätigung eines Tasters durch einen Benutzer ist. Dabei kann der wenigstens eine Sensor ein Wärmebildkamerasensor umfassend beispielsweise ein Infrarot-Detektorarray und Teil eines erfindungsgemäßen Kamerasystems sein, welche zusätzlich den Taster zum Initiieren des Bereitstellens der Bilddaten und/oder des Ermittelns der Temperaturdifferenz umfasst.

Ebenfalls Gegenstand der Erfindung ist ein Computerprogramm, insbesondere Computerprogrammprodukt, umfassend Befehle, die bei der Ausführung des Computerprogrammes durch einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Ebenfalls Gegenstand der Erfindung ist eine Vorrichtung zur Datenverarbeitung, die eingerichtet ist, das erfindungsgemäße Verfahren auszuführen. Als die Vorrichtung kann bspw. ein Computer vorgesehen sein, welcher das erfindungsgemäße Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls Gegenstand der Erfindung kann ein computerlesbares Speichermedium sein, welches das erfindungsgemäße Computerprogramm aufweist und/oder Befehle umfasst, die bei der Ausführung durch einen Computer diesen veranlassen, das erfindungsgemäße Verfahren auszuführen. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Ebenfalls Gegenstand der Erfindung kann ein Kamerasystem sein, umfassend wenigstens einen Sensor, insbesondere einen Wärmebildkamerasensor, eine erfindungsgemäße Vorrichtung zur Datenverarbeitung sowie eine Anzeige, wobei der wenigstens eine Sensor für die Erfassung der Bilddaten und der weiteren Bilddaten ausgebildet ist. Damit bringt das erfindungsgemäße Kamerasystem die gleichen Vorteile mit sich, wie sie ausführlich mit Bezug auf das erfindungsgemäße Verfahren beschrieben worden sind.

Darüber hinaus kann das erfindungsgemäße Verfahren auch als ein computerimplementiertes Verfahren ausgeführt sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:

Fig. 1 eine schematische Visualisierung eines Verfahrens, ein Kamerasystem mit einem Sensor, einer Vorrichtung, eines Speichermediums sowie eines Computerprogramms gemäß Ausführungsbeispielen der Erfindung,

Fig. 2 eine schematische Darstellung eines Kamerasystems in perspektivischer Vorderansicht gemäß Ausführungsbeispielen der Erfindung,

Fig. 3 eine schematische Darstellung eines Kamerasystems in perspektivischer Rückansicht gemäß Ausführungsbeispielen der Erfindung,

Fig. 4 eine schematische Darstellung eines Verfahrens zum Bestimmen einer Anzahl an Mittelungen gemäß Ausführungsbeispielen der Erfindung,

Fig. 5 eine schematische Darstellung eines Verfahrens zum Auswerten weiterer Bilddaten gemäß Ausführungsbeispielen der Erfindung.

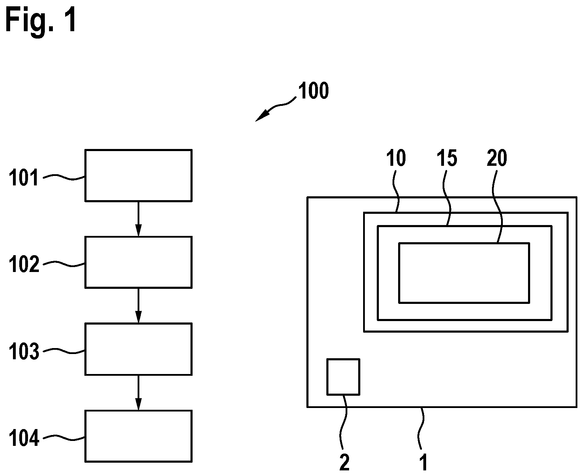

In Fig. 1 sind ein Verfahren 100, ein Kamerasystem 1 mit einem Sensor 2, eine Vorrichtung 10, ein Speichermedium 15 sowie ein Computerprogramm 20 gemäß Ausführungsbeispielen der Erfindung schematisch dargestellt.

Fig. 1 zeigt insbesondere ein Ausführungsbeispiel für ein Verfahren 100 zum Verringern eines Rauschens in Bilddaten. In einem ersten Schritt 101 werden Bilddaten bereitgestellt, wobei die Bilddaten wenigstens ein Wärmebild umfassen, wobei die Bilddaten aus einer Erfassung wenigstens eines Sensors 2 resultieren. In einem zweiten Schritt 102 wird eine in dem wenigstens einen Wärmebild dargestellte Temperaturdifferenz auf Basis einer Analyse von Temperaturdaten des wenigstens einen Wärmebildes ermittelt. In einem dritten Schritt 103 wird eine Anzahl an Mittelungen für eine Auswertung von weiteren Bilddaten auf Basis der ermittelten Temperaturdifferenz bestimmt, wobei die Anzahl an Mittelungen vorgibt, wie viele Wärmebilder jeweils für die Auswertung der weiteren Bilddaten gemittelt werden, wobei die weiteren Bilddaten aus einer weiteren Erfassung des wenigstens einen Sensors 2 resultieren. In einem vierten Schritt wird das Rauschen in den weiteren Bilddaten durch die Auswertung mit der bestimmten Anzahl an Mittelungen verringert.

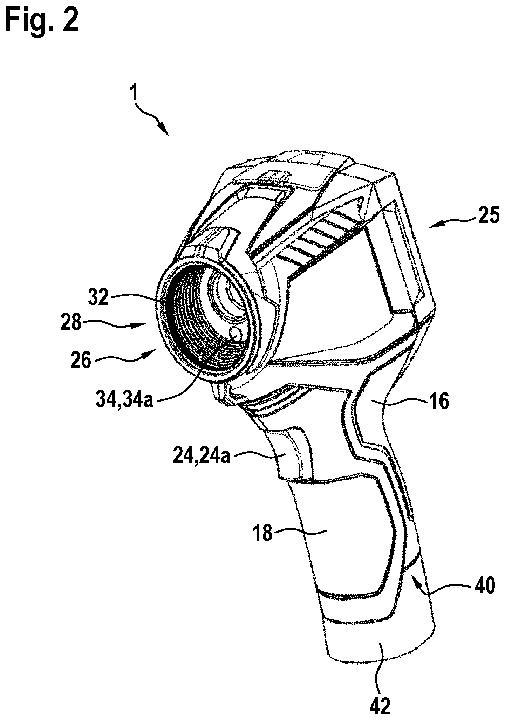

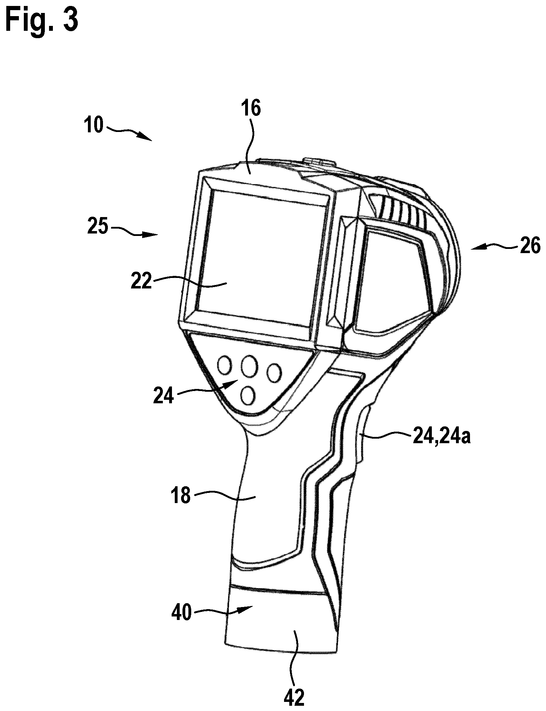

Im Folgenden wird ein erfindungsgemäßes Kamerasystem 1 beschrieben. Fig. 2 und Fig. 3 zeigen jeweils eine beispielhafte Ausführungsform dieses Kamerasystems 1 in perspektivischer Vorderansicht bzw. in einer perspektivischen Rückansicht. Das Kamerasystem 1 ist dazu ausgebildet, zweidimensionale Temperaturdaten, insbesondere ein Wärmebild, einer zu untersuchenden Szenerie zu ermitteln. Die Szenerie kann eine beliebige zu untersuchende Anordnung sein, die typischerweise Gegenstände, insbesondere Oberflächen von Gegenständen, oder dergleichen umfasst. Beispiele für eine derartige Szenerie können eine Hausfassade, ein Sicherungskasten, eine Personengruppe, eine Landschaft oder dergleichen sein.

Das Kamerasystem 1 umfasst ein Gehäuse 16 mit einem Griff 18. Mit dem Griff 18 kann das Kamerasystem 1 von einem Benutzer in einer Hand gehalten werden. Das Gehäuse 16 des Kamerasystems 1 weist weiterhin auf einer dem Benutzer während der Benutzung des Kamerasystems 1 zugewandten Seite 25 eine Ausgabevorrichtung in Form eines berührungssensitiven Bildschirms 22 sowie Bedienelemente 24 zur Benutzereingabe und Steuerung des Kamerasystems 1 auf. Insbesondere weist das Kamerasystem 1 auch einen Taster 24a auf, mit dem ein Benutzer das Ermitteln der zweidimensionalen Temperaturdaten der zu untersuchenden Szenerie initiieren kann.

Auf der dem Benutzer abgewandten Seite 26 des Gehäuses 16 ist eine Eintrittsöffnung 28 in dem Gehäuse 16 vorgesehen. Die Eintrittsöffnung 28 definiert (ggf. in Zusammenwirken mit einer hier nicht dargestellten Optik des Kamerasystems 1) den

Erfassungsbereich des Kamerasystems 1. Die in einem Raumwinkelbereich oder in den Raumwinkelbereich von der Szenerie, insbesondere von den Gegenständen der Szenerie, ausgestrahlte Infrarotstrahlung wird von dem Kamerasystem 1 erfasst. Unmittelbar hinter der Eintrittsöffnung 28 befindet sich in einem Streulicht
mindernden Lichttubus 32 ein Linsensystem als Optik (hier nicht näher dargestellt). Das Linsensystem ist für Strahlung im mittleren Infrarotbereich durchlässig und dient der Fokussierung von Infrarotstrahlung auf ein Infrarot-Detektorarray des Kamerasystems 1.

Auf der dem Benutzer während der Benutzung des Kamerasystems 1 abgewandten Seite 26 des Gehäuses 16 befindet sich in dem Gehäuse 16 eine Projektionsvorrichtung 34, die dazu ausgebildet ist, mittels eines Infrarot-Detektorarrays ermittelte zweidimensionale Temperaturdaten in ein projizierbares Bild umzuwandeln und dieses projizierbare Bild auf die Szenerie zu projizieren. Die Projektionsvorrichtung 34 umfasst in dem beschriebenen Ausführungsbeispiel eine Auswerteeinrichtung (nicht näher dargestellt) sowie einen Videoprojektor 34a ("Beamer"), der in dem Gehäuse 16 des Kamerasystems 1 angeordnet ist. Das auf die Szenerie 14 projizierte Bild 36 dient der Augmentierung einer von der Szenerie, insbesondere von einer Projektionsfläche der Szenerie, definierten Umgebung.

Ferner kann das Kamerasystem 1 eine im visuellen Spektrum arbeitende Kamera (hier nicht näher dargestellt) zur Aufnahme von visuellen Bildern aufweisen. Derartige Bilder können gemeinsam mit einem aus einer von dem Benutzer initiierten Temperaturmessung generierten Wärmebild ausgegeben werden, insbesondere zumindest teilweise mit dem Wärmebild überlagert oder überblendet ausgegeben werden.

Auf der Unterseite der Wärmebildkamera 10 weist der Griff 18 ferner eine Aufnahme 40 zur Aufnahme eines Energiespeichers 42 auf, der beispielhaft in Form eines aufladbaren Akkumulators oder in Form von Batterien ausgeführt sein kann.

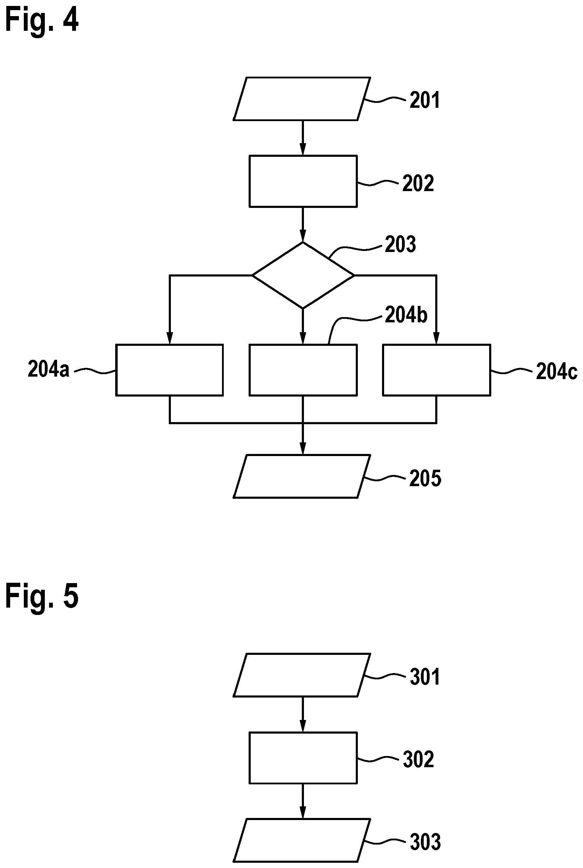

Fig. 4 zeigt ein Ausführungsbeispiel für ein Verfahren zum Bestimmen einer Anzahl an Mittelungen für eine Auswertung von Bilddaten. In einem ersten Schritt 201 wird dabei ein Wärmebild mit Temperaturdaten bereitgestellt. In einem zweiten Schritt 202 wird eine Temperaturdifferenz in dem bereitgestellten Wärmebild ermittelt. In einem dritten Schritt 203 wird die Temperaturdifferenz evaluiert. Im Falle, dass die Temperaturdifferenz einen hohen Wert von beispielsweise 50 °C aufweist, beziehungsweise einen entsprechend definierten Schwellwert überschreitet, wird für die Anzahl an Mittelungen gemäß dem Schritt 204a der Wert eins gewählt. Im Falle, dass die Temperaturdifferenz einen mittleren Wert von beispielsweise 10 °C aufweist, beziehungsweise sich in einem entsprechend definierten Bereich befindet, wird für die Anzahl an Mittelungen gemäß dem Schritt 204b der Wert zwei gewählt. Im Falle, dass die Temperaturdifferenz einen niedrigen Wert von beispielsweise 5 °C aufweist, beziehungsweise einen entsprechend definierten Schwellwert unterschreitet, wird für die Anzahl an Mittelungen gemäß dem Schritt 204c der Wert vier gewählt. Anschließend wird gemäß Schritt 205 die entsprechend gewählte Anzahl an Mittelungen für eine Auswertung weiterer Bilddaten bestimmt, beziehungsweise festgelegt.

Fig. 5 zeigt ein Ausführungsbeispiel für ein Verfahren zum Auswerten weiterer Bilddaten. Dabei werden in einem ersten Schritt 301 weitere Bilddaten bereitgestellt. In einem zweiten Schritt 302 wird pixelweise ein Mittelwert auf Basis der bestimmten Anzahl an Mittelungen bestimmt. Anschließend wird in einem dritten Schritt 303 das aus der pixelweisen Berechnung resultierende Wärmebild dargestellt, insbesondere auf einem Bildschirm 22 des Kamerasystems 1.

Die Bildqualität von Wärmebildkameras wird insbesondere durch eine Auflösung und ein Rauschen (NETD) bestimmt. NETD beschreibt die "Noise Equivalent Temperature Difference", d.h. das thermische Rauschen im Bild. Ein NETD von 50mK entspricht dabei beispielsweise einer Standardabweichung des Bildrauschens in °C.

Temperaturen werden in Wärmebildern vorzugsweise als Farben wiedergegeben, wobei die gemessenen Temperaturen in der Szene typischerweise mit 256 oder 512 Farben dargestellt werden. Typischerweise kann der minimale Span 5°C betragen, wobei der Span eine Differenz zwischen einer minimal und einer maximal in dem Bild dargestellten Temperatur ist. Bei einer kleinen Temperaturdifferenz von z.B. 1°C beträgt der Span beispielsweise 5°C welcher mit 512 Farben dargestellt werden und zu einer Darstellung von etwa 0.01°C pro Farbe führen kann. Dies entspricht beispielsweise fünf Farben pro NETD. Eine große Temperaturdifferenz von z.B. 100°C führt beispielsweise zu einem Span von 100°C welcher mit 512 Farben dargestellt werden und zu einer Darstellung von etwa 0.2°C pro Farbe führen kann. Dies entspricht insbesondere einer Farbe pro NETD.

Die Erfindung soll gemäß Ausführungsbeispielen in Abhängigkeit des sich aus der Temperaturdifferenz im Bild ergebenen Span eine geeignete Mittelung von einzelnen Bildern wählen und damit vorzugsweise auch ein Optimum zwischen Bildwiederholrate und Rauschen herstellen.

Es soll beispielsweise der sich aus der Temperaturdifferenz ergebende Span berechnet werden. Liegt die Temperaturschwelle pro Farbe nahe bei oder über dem Rauschen (z.B. 0.2°C versus 50mK NETD), kann eine zeitliche Mittelung über mehrere Bilder zu keiner bzw. nur einer relativ geringen Bildverbesserung führen. Hier sollte vorzugsweise eine kleine zeitliche Mittelung und eine entsprechend höhere Bildwiederholrate gewählt werden. Umgekehrt kann bei kleinem Span eine größere zeitliche Mittelung zu Lasten einer kleineren Bildwiederholrate vorteilhaft sein. Über diese beiden Einstellungen hinaus, ist es auch möglich weitere Bereiche zu definieren. So könnte ein sehr kleiner Span zu einer sehr großen Mittelung, ein kleiner Span zu einer großen Mittelung, ein mittlerer Span zu einer normalen Mittelung, ein großer Span zu einer kleinen Mittelung und ein sehr großer Span zu einer sehr kleinen Mittelung führen. Ebenso ist ein fließender Übergang von einem Bereich in den nächsten denkbar.

Eine in dem Kamerasystem 1 gemäß Ausführungsbeispielen vorgesehene Vorrichtung zur Datenverarbeitung 10, beziehungsweise Recheneinheit, bestimmt vorzugsweise fortlaufend aus den gemessenen Temperaturdaten eines jeweiligen Wärmebildes die Temperaturdifferenz und den Span. Nacheilend wird gemäß Ausführungsbeispielen die Anzahl der für eine zeitliche Mittelung verwendeten Wärmebilder angepasst.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

**Patentansprüche**

1. Computerimplementiertes Verfahren (100) zum Verringern eines Rauschens in Bilddaten, umfassend die nachfolgenden Schritte:

   - Bereitstellen (101) von Bilddaten, wobei die Bilddaten wenigstens ein Wärmebild umfassen, wobei die Bilddaten aus einer Erfassung wenigstens eines Sensors (2) resultieren,
   - Ermitteln (102) einer in dem wenigstens einen Wärmebild dargestellten Temperaturdifferenz auf Basis einer Analyse von Temperaturdaten des wenigstens einen Wärmebildes, wobei die Temperaturdifferenz einen Bereich zwischen einem niedrigsten und höchsten in dem Wärmebild dargestellten Temperaturwert widerspiegelt,
   - Bestimmen (103) einer Anzahl an Mittelungen für eine Auswertung von weiteren Bilddaten auf Basis der ermittelten Temperaturdifferenz, wobei die Anzahl an Mittelungen vorgibt, wie viele Wärmebilder jeweils für die Auswertung der weiteren Bilddaten gemittelt werden, wobei die weiteren Bilddaten aus einer weiteren Erfassung des wenigstens einen Sensors (2) resultieren,
   - Verringern (104) des Rauschens in den weiteren Bilddaten durch die Auswertung mit der bestimmten Anzahl an Mittelungen.

2. Verfahren (100) nach Anspruch 1,
   **dadurch gekennzeichnet,**
   **dass** das Bestimmen (103) der Anzahl an Mittelungen die folgenden Schritte umfasst:

   - Definieren von wenigstens zwei Bereichen für die Temperaturdifferenz, wobei einem jeweiligen Bereich eine definierte Anzahl an Mittelungen zugeordnet wird,
   - Bestimmen der Anzahl an Mittelungen auf Basis eines Vergleichs der ermittelten Temperaturdifferenz mit den wenigstens zwei definierten Bereichen für die Temperaturdifferenz.

3. Verfahren (100) nach einem der vorhergehenden Ansprüche,
   **dadurch gekennzeichnet,**
   **dass** das Verfahren ferner den folgenden Schritt umfasst:

   - Auswerten der weiteren Bilddaten, wobei auf Basis der Anzahl an Mittelungen ein jeweiliges resultierendes Wärmebild ermittelt wird.

4. Verfahren (100) nach Anspruch 3,
**dadurch gekennzeichnet,**
**dass** das Verfahren ferner den folgenden Schritt umfasst:

- Initiieren einer Ausgabe des jeweiligen resultierenden Wärmebildes.

5. Verfahren (100) nach Anspruch 3 oder 4,
**dadurch gekennzeichnet,**
**dass** das Auswerten der weiteren Bilddaten den folgenden Schritt umfasst:

- Berechnen eines Mittelwertes für wenigstens einen jeweiligen Pixel des jeweiligen resultierenden Wärmebildes auf Basis der weiteren Bilddaten und der Anzahl an Mittelungen, um durch den berechneten Mittelwert eine Farbe des wenigstens einen jeweiligen Pixels zu bestimmen.

6. Verfahren (100) nach Anspruch 5,
**dadurch gekennzeichnet,**
**dass** das Berechnen des Mittelwertes nur für wenigstens einen bestimmten Teilbereich des resultierenden Wärmebildes durchgeführt wird.

7. Verfahren (100) nach einem der vorhergehenden Ansprüche,
**dadurch gekennzeichnet,**
**dass** zumindest das Bereitstellen (101) und/oder das Ermitteln (102) zyklisch oder auf Basis einer Auslösebedingung durchgeführt werden, um eine neue Anzahl an Mittelungen für die Auswertung zu bestimmen.

8. Computerprogramm (20), umfassend Befehle, die bei der Ausführung des Computerprogramms (20) durch einen Computer (10) diesen veranlassen, das Verfahren (100) nach einem der vorhergehenden Ansprüche auszuführen.

9. Vorrichtung (10) zur Datenverarbeitung, die eingerichtet ist, das Verfahren (100) nach einem der Ansprüche 1 bis 7 auszuführen.

10. Computerlesbares Speichermedium (15), umfassend Befehle, die bei der Ausführung durch einen Computer (10) diesen veranlassen, die Schritte des Verfahrens (100) nach einem der Ansprüche 1 bis 7 auszuführen.

11. Kamerasystem (1) umfassend wenigstens einen Sensor (2), eine Vorrichtung (10) zur Datenverarbeitung nach Anspruch 9 sowie eine Anzeige (3), wobei der wenigstens eine Sensor (2) für die Erfassung der Bilddaten und der weiteren Bilddaten ausgebildet ist.

## Claims

1. Computer-implemented method (100) for reducing noise in image data, comprising the following steps:

- providing (101) image data, the image data comprising at least one thermal image, the image data resulting from an acquisition by at least one sensor (2),
- determining (102) a temperature difference shown in the at least one thermal image on the basis of an analysis of temperature data of the at least one thermal image, the temperature difference reflecting a range between a lowest and a highest temperature value shown in the thermal image,
- ascertaining (103) a number of averagings for an evaluation of further image data on the basis of the determined temperature difference, the number of averagings specifying how many thermal images are averaged in each case for the evaluation of the further image data, the further image data resulting from a further acquisition by the at least one sensor (2),
- reducing (104) the noise in the further image data by means of the evaluation using the ascertained number of averagings.

2. Method (100) according to Claim 1,
**characterized**
**in that** ascertaining (103) the number of averagings comprises the following steps:

- defining at least two ranges for the temperature difference, a respective range being assigned a defined number of averagings,
- ascertaining the number of averagings on the basis of a comparison of the determined temperature difference with the at least two defined ranges for the temperature difference.

3. Method (100) according to either of the preceding claims,
**characterized**
**in that** the method also comprises the following step:

- evaluating the further image data, the number of averagings being taken as a basis for determining a respective resulting thermal image.

4. Method (100) according to Claim 3,
**characterized**
**in that** the method also comprises the following step:

- initiating an output of the respective resulting thermal image.

5. Method (100) according to Claim 3 or 4,

**characterized**
**in that** evaluating the further image data comprises the following step:

- computing a mean value for at least one respective pixel of the respective resulting thermal image on the basis of the further image data and the number of averagings, in order to use the computed mean value to ascertain a colour of the at least one respective pixel.

6. Method (100) according to Claim 5,
**characterized**
**in that** the mean value is computed only for at least a specific subregion of the resulting thermal image.

7. Method (100) according to one of the preceding claims,
**characterized**
**in that** at least the providing (101) and/or the determining (102) are performed cyclically or on the basis of a trigger condition, in order to ascertain a new number of averagings for the evaluation.

8. Computer program (20) comprising instructions that, when the computer program (20) is executed by a computer (10), cause said computer to carry out the method (100) according to one of the preceding claims.

9. Device (10) for data processing, configured to carry out the method (100) according to one of Claims 1 to 7.

10. Computer-readable storage medium (15) comprising instructions that, when executed by a computer (10), cause said computer to carry out the steps of the method (100) according to one of Claims 1 to 7.

11. Camera system (1) comprising at least one sensor (2), a device (10) for data processing according to Claim 9 and a display (3), the at least one sensor (2) being designed to acquire the image data and the further image data.

**Revendications**

1. Procédé (100) mis en œuvre par ordinateur destiné à réduire le bruit dans des données d'image, comprenant les étapes suivantes :

- fourniture (101) de données d'image, les données d'image comprenant au moins une image thermique, les données d'image résultant d'une détection d'au moins un capteur (2),
- détermination (102) d'une différence de température représentée dans l'au moins une image thermique sur la base d'une analyse de données de température de l'au moins une image thermique, la différence de température reflétant une plage entre une valeur de température la plus basse et la valeur de température la plus élevée représentées sur l'image thermique,
- définition (103) d'un nombre de moyennes pour une évaluation d'autres données d'image sur la base de la différence de température déterminée, le nombre de moyennes prédéfinissant le nombre d'images thermiques qui sont moyennées pour l'évaluation des autres données d'image, les autres données d'image résultant d'une autre détection de l'au moins un capteur (2),
- réduction (104) du bruit dans les autres données d'image par l'évaluation avec le nombre défini de moyennes.

2. Procédé (100) selon la revendication 1,
**caractérisé en ce**
**que** la définition (103) du nombre de moyennes comprend les étapes suivantes :

- définition d'au moins deux plages pour la différence de température, un nombre défini de moyennes étant associé à une plage respective,
- définition du nombre de moyennes sur la base d'une comparaison de la différence de température déterminée aux au moins deux plages définies pour la différence de température.

3. Procédé (100) selon l'une des revendications précédentes,
**caractérisé en ce**
**que** le procédé comprend en outre l'étape suivante :

- évaluation des autres données d'image, une image thermique respective en résultant étant déterminée sur la base du nombre de moyennes.

4. Procédé (100) selon la revendication 3,
**caractérisé en ce**
**que** le procédé comprend en outre l'étape suivante :

- lancement d'une sortie de l'image thermique respective en résultant.

5. Procédé (100) selon la revendication 3 ou 4,
**caractérisé en ce**
**que** l'évaluation des autres données d'image comprend l'étape suivante :

- calcul d'une valeur moyenne pour au moins un pixel respectif de l'image thermique respective en résultant sur la base des autres données d'image et du nombre de moyennes pour définir une couleur de l'au moins un pixel respectif par la valeur moyenne calculée.

6. Procédé (100) selon la revendication 5, **caractérisé en ce que** la valeur moyenne est calculée seulement pour au moins une zone partielle définie de l'image thermique en résultant.

7. Procédé (100) selon l'une des revendications précédentes, **caractérisé en ce qu'**au moins la fourniture (101) et/ou la détermination (102) sont effectuées cycliquement ou sur la base d'une condition de déclenchement pour définir un nouveau nombre de moyennes pour l'évaluation.

8. Programme informatique (20), comprenant des instructions qui, lors de l'exécution du programme informatique (20) par un ordinateur (10), amènent celui-ci à exécuter le procédé (100) selon l'une des revendications précédentes.

9. Dispositif (10) de traitement de données, qui est mis au point pour exécuter le procédé (100) selon l'une des revendications 1 à 7.

10. Support de stockage lisible par ordinateur (15), comprenant des instructions qui, lorsqu'elles sont exécutées par un ordinateur (10), amènent celui-ci à exécuter les étapes du procédé (100) selon l'une des revendications 1 à 7.

11. Système de caméra (1) comprenant au moins un capteur (2), un dispositif (10) pour le traitement de données selon la revendication 9 et un affichage (3), l'au moins un capteur (2) étant formé pour détecter les données d'image et les autres données d'image.

# Fig. 1

# Fig. 2

# Fig. 3

# Fig. 4

201

202

203

204a    204b    204c

205

# Fig. 5

301

302

303

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2020045231 A1
- US 2021218909 A1